# EUROPÄISCHE PATENTANMELDUNG

(11) **EP 1 213 178 A2**
(43) Veröffentlichungstag der Anmeldung: **12.06.2002**
(21) Anmeldenummer: 01128674.7
(22) Anmeldetag: 01.12.2001
(51) Int. Cl.: B60Q 1/00, B60Q 1/076, B60Q 1/12, F21V 8/00

(54) **Fahrzeugscheinwerfer**

(30) Priorität: 06.12.2000 DE 10060491
(71) Anmelder: Hella KG Hueck & Co., 59552 Lippstadt (DE)
(72) Erfinder: Eichhorn, Karsten, 59320 Ennigerloh (DE); Lüder, Christian, 33729 Bielefeld (DE); Topp, Ewald, 59609 Anröchte (DE)

(57) **Zusammenfassung**

Scheinwerfer, insbesondere für Kraftfahrzeuge mit einer einem hinteren Endstück (3) eines Lichtleiters (2) vorgelagerten Lichtquelle und einem einem vorderen eine Auskopplungsgeometrie aufweisenden Endstück (3) des Lichtleiters (2) vorgelagerten Auskopplungselement (1) mit vorgegebener Lichtverteilung, wobei das vordere Endstück (3) des Lichtleiters (1) in seiner relativen Lage zum Auskopplungselement (1) zur Erzeugung einer variablen Lichtbeeinflussung in einer parallel zu einer Einkoppelfläche (5) des Auskopplungselements (1) angeordneten Verstellebene mindestens in horizontaler Richtung (8) um einen horizontalen Verstellweg verstellbar ist, und wobei die Ausdehnung des Auskopplungselementes (1) im Bereich der Einkoppelfläche (5) in Verstellrichtung mindestens dem Verstellweg entspricht.

Verfahren zur variablen Lichtbeeinflussung eines Scheinwerfers, insbesondere für Kraftfahrzeuge, mit einem Lichtleiter mit einem vorderen Endstück (3) und einem dem vorderen Endstück (3) vorgelagerten Auskopplungselement (1), wobei das vordere Endstück (3) zur Erzeugung einer variablen Lichtverteilung in horizontaler Richtung (8) relativ gegenüber dem Auskopplungselement (1) in einer Verstellebene mindestens um einen horizontalen Verstellweg dynamisch verstellt wird.

## Beschreibung

Die Erfindung betrifft einen Scheinwerfer, insbesondere für Kraftfahrzeuge, mit einer einem hinteren Endstück eines Lichtleiters vorgelagerten Lichtquelle und einem einem vorderen eine Auskopplungsgeometrie aufweisenden Endstück des Lichtleiters vorgelagerten Auskopplungselement mit vorgegebener Lichtverteilung.

Die Erfindung betrifft weiterhin ein Verfahren zur variablen Lichtbeeinflussung eines Scheinwerfers, insbesondere für Kraftfahrzeuge, mit einem Lichtleiter mit einem vorderen Endstück und einem dem vorderen Endstück vorgelagerten Auskopplungselement.

In jüngster Zeit gibt es Überlegungen, Scheinwerfer in Lichtleitertechnik auszuführen.

Aus der EP 0 857 913 A2 ist ein Scheinwerfer für Kraftfahrzeuge bekannt, bei dem das Licht einer Lichtquelle über ein hinteres Ende eines Lichtleiters eingekoppelt und über ein vorderes Ende des Lichtleiters ausgekoppelt und über einen Linsenkörper bzw. ein Auskopplungselement ausgekoppelt bzw. abgestrahlt wird. Das Auskopplungselement ist dabei als ein kartesischen Oval ausgebildet, das ausschließlich als Nebelscheinwerfer ausgebildet ist. Das Auskopplungselement weist zwei in einem Abstand zueinander angeordnete parallele Seitenflächen auf, die vorderseitig einen kreisbogenförmigen Kantenverlauf aufweisen. Die sich an die Kanten anschließende Lichtaustrittsfläche des Auskopplungselementes ist, bezüglich einer vertikalen Ebene konvexförmig ausgebildet, so dass das abgestrahlte Lichtbündel in vertikaler Richtung fokussiert wird. Die zwei einander gegenüberliegenden Seitenflächen sind plan ausgebildet. Durch eine vertikale Verschiebung des vorderen Endstückes gegenüber dem Auskopplungselement wird eine Verstellung der sogenannten Hell-Dunkel-Grenze erreicht. Diese Verstellung in vertikaler Richtung kann z. B. vorteilhaft dann vorgenommen werden, wenn eine weiche Hell-Dunkel-Grenze erzeugt werden soll.

Nachteilig bei dem bekannten Scheinwerfer ist, dass er aufgrund seines Aufbaues nicht für unterschiedliche Einsatzmöglichkeiten bzw. variable Lichtverteilungen geeignet ist. Beispielsweise ist der bekannte Scheinwerfer auch nicht zur Erzeugung eines dynamisch in Abhängigkeit von der Fahrtrichtung veränderbaren Kurvenlichtes geeignet.

Aufgabe der vorliegenden Erfindung ist es daher, einen Scheinwerfer unter Verwendung eines Lichtleiters zu schaffen, dessen Lichtverteilung variabel beeinflussbar und mindestens in horizontaler Richtung, beispielsweise zur Erzeugung eines Kurvenlichtes, dynamisch verstellbar ist.

Diese Aufgabe wird erfindungsgemäß in Verbindung mit dem Oberbegriff des Anspruches 1 dadurch gelöst, dass das vordere Endstück des Lichtleiters in seiner relativen Lage zum Auskopplungselement zur Erzeugung einer variablen Lichtbeeinflussung entlang einer zu einer Einkoppelfläche des Auskopplungselementes ausgerichteten Verstellfläche mindestens in horizontaler Richtung um einen horizontalen Verstellweg verstellbar ist und dass die Ausdehnung des Auskopplungselementes im Bereich der Einkoppelfläche in Verstellrichtung mindestens dem Verstellweg entspricht.

Dadurch, dass das vordere Endstück des Lichtleiters entlang der Verstellfläche mindestens in horizontaler Richtung um einen horizontalen Verstellweg verstellbar ist, und dass die Ausdehnung des Auskopplungselementes im Bereich der Einkoppelfläche in Verstellrichtung mindestens dem Verstellweg entspricht, ist es möglich, durch Verstellen des vorderen Endstückes in horizontaler Richtung eine variable Lichtbeeinflussung der erzeugten Lichtverteilung zu erzielen. Der Scheinwerfer kann so beispielsweise zur Erzeugung eines Kurvenlichtes in Abhängigkeit von der Fahrtrichtung des Kraftfahrzeuges eingesetzt werden.

Erfindungsgemäß kann die relative Lageänderung des Endstücks zur Einkoppelfläche des Auskopplungselements entlang eines Verstellweges auf einer Linie einer ebenen Verstellfläche (Verstellebene) oder einer gewölbten Verstellfläche erfolgen.

Dadurch, dass vorzugsweise lediglich das vordere Endstück des Lichtleiters bewegt werden muss, brauchen vorteilhaft nur geringe Massen bewegt werden.

Das relativ großvolumige Auskopplungselement kann dabei feststehen. Dies führt zum einen zu kleinen Spaltmaßen und zum anderen zu Bauraumvorteile durch kleine Volumina.

Gemäß einer bevorzugten Ausführungsform der Erfindung ist das vordere Endstück des Lichtleiters in seiner relativen Lage zum Auskopplungselement zur Erzeugung einer variablen Lichtbeeinflussung in einer parallel zu der Einkoppelfläche des Auskopplungselementes angeordneten Verstellebene mindestens in horizontaler Richtung und in einer vertikalen Richtung um einen vertikalen Verstellweg verstellbar.

Durch die Verstellung des vorderen Endstückes in vertikaler Richtung kann zum einen die Grundeinstellung der Horizontalen bzw. der Hell-Dunkel-Grenze in vertikaler Richtung erfolgen. Zum anderen kann aber auch durch eine dynamische Verstellung der Hell-Dunkel-Grenze in vertikaler Richtung eine Leuchtweitenregulierung erfolgen. Die gewünschte Einstellung der Hell-Dunkel-Grenze kann zudem ohne Spaltmaße erfolgen.

Gemäß einer weiteren bevorzugten Ausführungsform der Erfindung ist das vordere Endstück in Richtung seiner Längsachse gegenüber dem Auskopplungselement verschiebbar.

Durch die Längsverschiebung des vorderen Endstückes lässt sich die Fokussierung des Auskopplungselementes verstellen, so dass die Lichtverteilung der Hell-Dunkel-Grenze und insbesondere die Schärfe der Lichtverteilung bzw. der Hell-Dunkel-Grenze beeinflussbar ist.

Gemäß einer weiteren bevorzugten Ausführungsform der Erfindung ist das vordere Endstück um seine Längsachse verdrehbar. Durch eine leichte Drehung des Endstückes lässt sich die Hell-Dunkel-Grenze ebenfalls beeinflussen. Durch Drehung eines vorderen Endstückes, wie es beispielsweise aus der EP 0 857 913 A2 bekannt ist, um ca. 15° lässt sich die Lichtverteilung aus einer ersten Position mit einem asymmetrischen Abblendlichtanteil in eine zweite Position mit einem etwa symmetrischen Autobahnlichtanteil bringen. Vorteilhaft kann zwischen einer Lichtverteilung für Rechtsverkehr und Linksverkehr umgeschaltet werden. Durch eine Drehung des vorderen Endstückes des Lichtleiters lässt sich die Lichtverteilung aus einer ersten Position mit Fernlichtanteil in eine zweite Position mit Autobahnlichtanteil bringen.

Gemäß einer bevorzugten Ausführungsform der Erfindung ist das vordere Endstück über eine motorgetriebene Verstellvorrichtung gegenüber dem Auskopplungselement verstellbar.
Durch eine motorgetriebene Verstellvorrichtung lässt sich die Lichtverteilung dynamisch nach vorgebbaren Werten einfach und kostengünstig variieren.

Nach einer weiteren bevorzugten Ausführungsform der Erfindung ist das Auskopplungselement als ein kartesisches Oval ausgebildet, das an seinem der Einkoppelfläche abgewandten Ende eine konvex gewölbte Auskoppelfläche aufweist.

Durch die konvexe Auskoppelfläche lässt sich sowohl in horizontaler als auch in vertikaler Richtung eine günstige Beeinflussung der Lichtverteilung erzielen.

Grundsätzlich ist es aber auch möglich, dass Auskopplungselement als eine Fresnellinse auszubilden.

Verfahren zur variablen Lichtbeeinflussung von Scheinwerfern für Kraftfahrzeuge weisen die in Verbindung mit den bekanntem Scheinwerfer oben genannten Nachteile auf.

Weitere Aufgabe der Erfindung ist es daher, ein Verfahrnen, insbesondere zur variabeln Lichtbeeinflussung eines Kraftfahrzeugscheinwerfers, in horizontaler Richtung, d. h. Verstellung der Vertikalen in horizontaler Richtung, unter Verwendung von Lichtleitern zu schaffen. Das Verfahren soll dabei einfach und kostengünstig durchgeführt werden können.

Diese Aufgabe wird erfindungsgemäß in Verbindung dem Oberbegriff des Anspruches 8 dadurch gelöst, dass das vordere Endstück zur Erzeugung einer variablen Lichtverteilung in horizontaler Richtung relativ gegenüber dem Auskopplungselement in eine Verstellebene mindestens um einen horizontalen Verstellweg dynamisch verstellt wird.

Durch die dynamische Verstellung des vorderen Endes des Lichtleiters um einen horizontalen Verstellweg, lässt sich einfach und kostengünstig eine variable Lichtverteilung bzw. Lichtbeeinflussung des Scheinwerfers in horizontaler Richtung, d. h. Verschieben der Vertikalen in horizontaler Richtung, erzielen.

Dadurch, dass mit dem vorderen Endstück nur eine relativ kleine Masse bewegt werden muss, lässt sich eine relativ schwingungsfreie dynamische Verstellung erzielen.

Gemäß einer bevorzugten Ausführungsform der Erfindung wird das vordere Endstück in horizontaler Richtung variabel in Abhängigkeit von der Fahrtrichtung des Kraftfahrzeuges zur Erzeugung eines Kurvenlichtes verstellt.

Durch die Verstellung des vorderen Endstückes in Abhängigkeit von der Fahrtrichtung des Kraftfahrzeuges lässt sich relativ einfach und kostengünstig ein fahrtrichtungsabhängiges Kurvenlicht erzielen.

Nach einer weiteren bevorzugten Ausführungsform der Erfindung wird das vordere Endstück relativ gegenüber dem Auskopplungselement in der Verstellebene um einen vertikalen Verstellweg zur Erzeugung einer dynamischen Leuchtweitenregulierung verstellt.

Durch die vertikale Verstellung lässt sich die dynamische Leuchtweitenregulierung ebenfalls einfach und kostengünstig erzielen.

Nach einer weiteren bevorzugten Ausführungsform der Erfindung wird zur Variation der Hell-Dunkel-Grenze das vordere Endstück um seine Längsachse gedreht.

Auch die Hell-Dunkel-Grenze lässt sich so einfach und kostengünstig in ihrer Lichtverteilung beeinflussen.

Obwohl die einzelnen Verstellmöglichkeiten des vorderen Endstückes gegenüber dem Auskopplungselement jeweils für sich allein genommen bereits zu einer effektiven Lichtverteilung führen, erweist sich eine Kombination bzw. Überlagerung der einzelnen Verstellmöglichkeiten als eine kostengünstige und wirtschaftliche universelle Beeinflussung der Lichtverteilung eines erfindungsgemäßen Scheinwerfers bzw. des Verfahrens zur variablen Lichtbeeinflussung. Durch entsprechend aufeinander abgestimmte Lichtleiter und Auskopplungselemente können so universell verwendbare und vor allem dynamisch variierbare Lichtverteilungen erzeugt werden.

Weitere Einzelheiten der Erfindung ergeben sich aus der nachfolgend ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: eine räumliche Darstellung eines Auskopplungselementes mit einem vorderen Endstück eines Lichtleiters in horizontal verschobenen Positionen,
- Figur 2:: eine Lichtverteilung quer zur Längsachse des Scheinwerfers von Fig. 1 in Abhängigkeit von den Positionen des vorderen Endstükkes,
- Figur 3:: eine räumliche Darstellung eines Auskopplungselementes mit einem vorderen Endstück eines Lichtleiters in vertikal verschobenen Positionen,
- Figur 4:: eine Lichtverteilung des Scheinwerfers von Fig. 3 in Abhängigkeit von den Positionen des vorderen Endstückes,

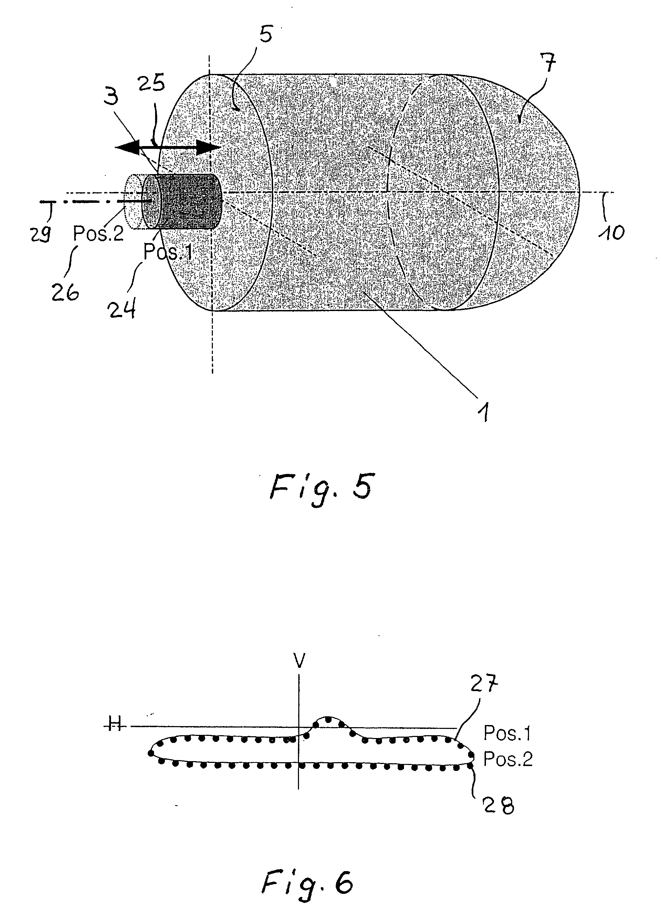

- Figur 5:: eine räumliche Darstellung eines Auskopplungselementes mit einem vorderen Ende eines Lichtleiters in einer ersten und in einer zweiten in Längsrichtung des vorderen Endstückes verschobenen Position,
- Figur 6:: eine Lichtverteilung quer zur Längsachse des Scheinwerfers von Fig. 5 in Abhängigkeit von den Positionen des vorderen Endstükkes,
- Figur 7:: eine räumliche Darstellung eines Auskopplungselement mit einem vorderen Endstückes eines Lichtleiters in einer ersten Pos. mit angedeuteter Drehrichtung in eine zweite Pos.,
- Figur 8:: eine Lichtverteilung eines Scheinwerfers entsprechend Fig. 7 mit einer Lichtverteilung in einer ersten Pos., die der ersten Pos. des vorderen Endstückes von Fig. 7 entspricht und einer Lichtverteilung in einer zweiten Pos. bei der das vordere Endstück gegenüber Pos. 1 um etwa 180° gedreht ist,
- Figur 9:: eine Lichtverteilung eines Scheinwerfers entsprechend Fig. 7 mit einer Lichtverteilung in einer ersten Pos. eines Endstückes und einer zweiten Pos., in der das Endstück gegenüber Pos. 1 um etwa 15° gedreht ist,
- Figur 10:: eine räumliche Darstellung eines Auskopplungselementes mit zwei einander gegenüberliegenden parallelen Seitenflächen und einem vorderen Endstück in einer ersten Pos. und
- Figur 11:: eine Lichtverteilung eines Scheinwerfers entsprechend Fig. 10 in einer quer zur Längsachse des Auskopplungselementes angeordneten Ebene.

Ein Scheinwerfer besteht im Wesentlichen aus einem Auskopplungselement 1 und einem Lichtleiter 2 mit einem vorderen Endstück 3.

An einem dem vordern Endstück 3 des Lichtleiters 2 abgewandten nichtdargestellten hinteren Endstück des Lichtleiters 2 ist eine ebenfalls nichtdargestellte Lampe mit einem Reflektor zur Einspiegelung von Licht in das hintere Endstück dem Lichtleiter vorgelagert.

Das Auskopplungselement 1 weist an seinem dem vorderen Endstück 3 zugewandten hinteren Ende 4 eine Einkoppelfläche 5 auf, die eine Verstellebene für das vordere Endstück 3 bildet. Die Verstellebene kann aber auch in einem Abstand parallel zur Einkoppelfläche 5 verlaufen. An seinem dem hinteren Ende 4 abgewandten vorderen Ende 6 weist das Auskopplungselement 1 eine konvex gewölbte Auskoppelfläche 7 auf. Das vordere Endstück 3 weist an seiner der Einkoppelfläche 5 benachbarten Auskoppelfläche eine nicht weiter dargestellte Auskopplungsgeometrie, wie sie beispielsweise aus der EP 0 857 913 A2 bekannt ist, auf.

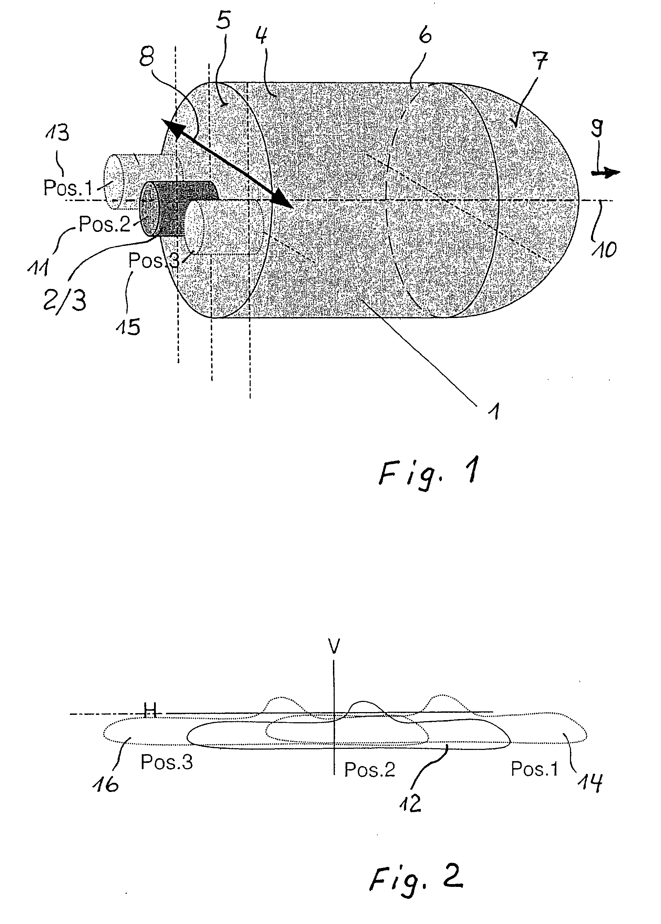

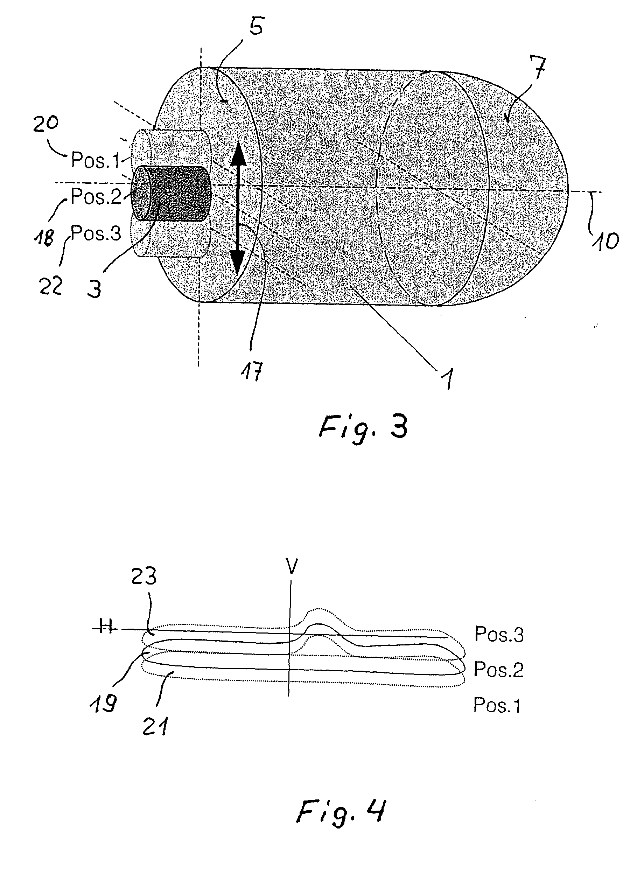

Wie in Figur 1 dargestellt, ist das vordere Endstück 3 in horizontaler Richtung 8 um einen horizontalen Verstellweg verstellbar. Dabei ergibt sich in Abstrahlrichtung 9 quer zur Längsachse 10 des Auskopplungselementes 1 in einer vertikalen Ebene eine Lichtverteilung wie sie in Figur 2 dargestellt ist. Die mittlere Pos. 11 des vorderen Endstückes 3 bewirkt dabei eine Lichtverteilung wie sie in Figur 2 als mittlere Lichtverteilung 12 dargestellt ist. Die in horizontaler Richtung verschobene erste Pos. 13 bewirkt eine Lichtverteilung wie sie als erste Lichtverteilung 14 in Figur 2 dargestellt ist. Die entgesetzt zur ersten Pos. 13 verschobene dritte Pos. 15 des vorderen Endstückes 3 bewirkt eine dritte Lichtverteilung 16, wie sie ebenfalls in Figur 2 dargestellt ist. Damit lässt sich durch Verschieben des vorderen Endstückes 3 in horizontaler Richtung 8 sowohl ein linkes als auch ein rechtes Kurvenlicht erzeugen.

Durch Verstellen des vorderen Endstückes 3 in einer vertikalen Richtung 10 lässt sich die Lichtverteilung in vertikaler Richtung beeinflussen. In der mittleren Pos. 18 des vorderen Endstückes 3 von Figur 3 wird eine Lichtverteilung erzeugt wie sie als mittlere Lichtverteilung 19 in Figur 4 dargestellt ist. In einer nach oben verschobenen ersten oberen Pos. 20 entsteht eine erste untere Lichtverteilung 21 wie sie in Figur 4 dargestellt ist. Durch Verschieben des vorderen Endstückes 3 in eine dritte untere Pos. 22 entsteht eine Lichtverteilung, wie sie in Figur 4 als dritte obere Lichtverteilung 23 dargestellt ist.

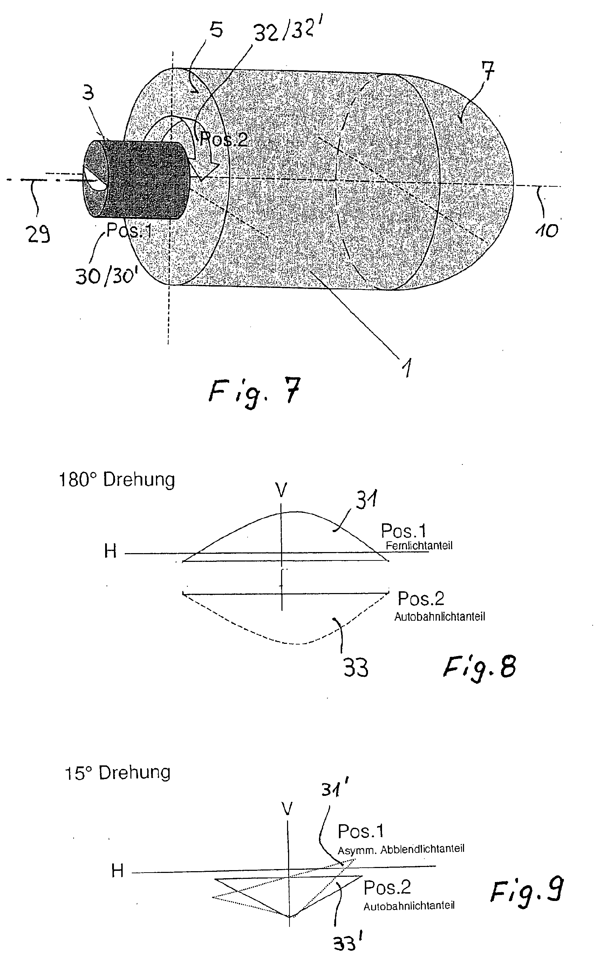

Durch ein Verschieben des vorderen Endstückes 3 aus seiner vorderen ersten Pos. 24 in Längsrichtung 25 in eine hintere zweite Pos. 26 wird eine Lichtverteilung erzeugt, wie in Figur 6 als erste vordere Lichtverteilung 27 und zweite hintere Lichtverteilung 28 dargestellt ist. Durch Defokussierung wird hierbei die Lichtverteilung bzw. deren Grenze unscharf und aufgeweicht.

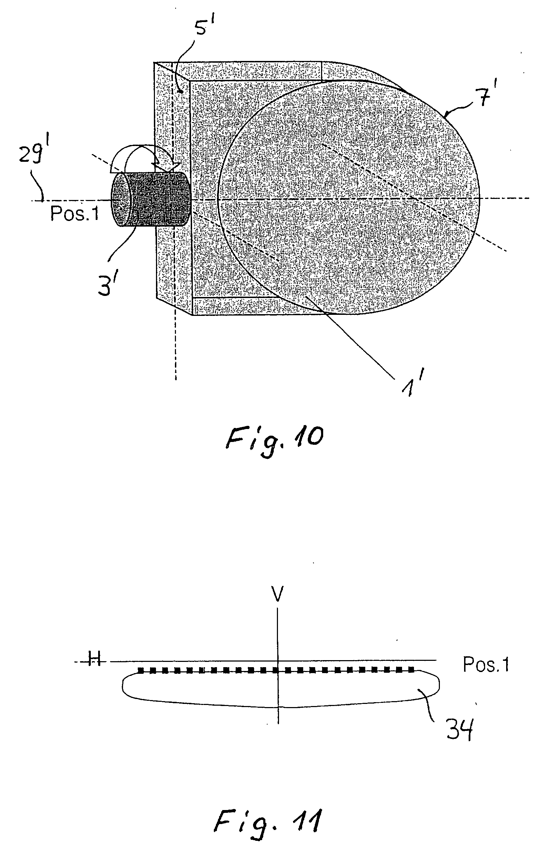

Durch Drehen des vordern Endstückes 3 um seine Längsachse (siehe Figur 7) lässt sich in Abhängigkeit von der Geometrie des Auskopplungselementes 1 und der Auskopplungsgeometrie des vorderen Endstückes 3 in einer ersten Drehpos. 30 einer erste Lichtverteilung 31 mit einem Fernlichtanteil entsprechend Figur 8 erzielen. Durch Drehen des vorderen Endstückes 3 um etwa 180° lässt sich in einer zweiten Drehpos. 32 eine zweite Lichtverteilung 33 mit einem Autobahnlichtanteil erzielen, wie sie ebenfalls in Figur 8 dargestellt ist. Mit entsprechender anderer Geometrie des vorderen Endstückes 3 lässt sich in einer ersten Drehpos. 30' eine erste Lichtverteilung 31' mit einem asymmetrischen Abblendlichtanteil, wie in Figur 9 dargestellt, erzeugen. Durch Drehung des vorderen Endstückes 3 um ca. 15° lässt sich in einer zweiten Drehpos. 32' eine zweite Lichtverteilung 33' mit einem Autobahnlichtanteil erzeugen, wie sie ebenfalls in Figur 9 dargestellt ist. Bei entsprechender Geometrie des Auskopplungselement 1' lässt sich durch Drehen des vorderen Endstück 3' (siehe Figur 10) eine Lichtverteilung 34 erzeugen bzw. variieren, wie sie in Figur 11 dargestellt ist.

Das vordere Endstück 3, 3' lässt sich über eine nichtdargestellte motorgetriebene Verstellvorrichtung gegenüber dem Auskopplungselement 1, 1' in seiner relativen Lage verstellen.

Selbstverständlich kann das Auskopplungselement 1, 1' auch gegenüber dem Endstück 3, 3' um den vorgegebenen Verstellweg verstellbar angeordnet sein. Wesentlich ist die relative Lageänderung zwischen dem Auskopplungselement 1, 1' und dem Endstück 3, 3'. Nach einer alternativen Ausführungsform kann die Lageänderung auch statt in einer parallel zu der Einkoppelfläche 5 des Auskopplungselementes 1, 1' angeordneten Verstellebene entlang einer gewölbten Verstellfläche erfolgen.

## Patentansprüche

1. Scheinwerfer, insbesondere für Kraftfahrzeuge, mit einer einem hinteren Endstück eines Lichtleiters vorgelagerten Lichtquelle und einem einem vorderen eine Auskopplungsgeometrie aufweisenden Endstück des Lichtleiters vorgelagerten Auskopplungselement mit vorgegebener Lichtverteilung, **dadurch gekennzeichnet, dass** das vordere Endstück (3, 3') des Lichtleiters (2) in seiner relativen Lage zum Auskopplungselement (1, 1') zur Erzeugung einer variablen Lichtbeeinflussung entlang einer zu einer Einkoppelfläche (5) des Auskopplungselementes (1, 1') ausgerichteten Verstellfläche mindestens in horizontaler Richtung (8) um einen horizontalen Verstellweg verstellbar ist und dass die Ausdehnung des Auskopplungselementes (1, 1') im Bereich der Einkoppelfläche (5) in Verstellrichtung mindestens dem Verstellweg entspricht.

2. Scheinwerfer nach Anspruch 1, **dadurch gekennzeichnet, dass** das vordere Endstück (3) des Lichtleiters (2) in seiner relativen Lage zum Auskopplungselement (1, 1') zur Erzeugung einer variablen Lichtbeeinflussung in einer parallel zu der Einkoppelfläche (5) des Auskopplungselementes (1, 1') angeordneten Verstellebene mindestens in horizontaler Richtung um einen horizontalen Verstellweg verstellbar ist und dass das vordere Endstück (3) des Lichtleiters (2) in einer vertikalen Richtung (17) um einen vertikalen Verstellweg verstellbar ist.

3. Scheinwerfer nach Anspruch 1 oder 2, **dadurch gekennzeichnet, dass** das vordere Endstück (3) in Richtung seiner Längssachse (29) gegenüber dem Auskopplungselement (1) verschiebbar ist.

4. Scheinwerfer nach einem der Ansprüche 1 bis 3, **dadurch gekennzeichnet, dass** das vordere Endstück (3, 3') um seine Längsachse (29, 29') verdrehbar ist.

5. Scheinwerfer nach einem der Ansprüche 1 bis 4, **dadurch gekennzeichnet, dass** das vordere Endstück (3, 3') über eine motorgetriebene Verstellvorrichtung gegenüber dem Auskopplungselement (1, 1') verstellbar ist.

6. Scheinwerfer nach einem der Ansprüche 1 bis 6, **dadurch gekennzeichnet, dass** das Auskopplungselement (3, 3') als ein kartesisches Oval ausgebildet ist, das an seinem der Einkoppelfläche (5, 5') abgewandten Ende (6) eine konvex gewölbte Auskoppelfläche (7, 7') aufweist.

7. Scheinwerfer nach einem der Ansprüche 1 bis 6, **dadurch gekennzeichnet, dass** das Auskopplungselement (1) als eine Fresnellinse ausgebildet ist.

8. Verfahren zur variablen Lichtbeeinflussung eines Scheinwerfers, insbesondere für Kraftfahrzeuge, mit einem Lichtleiter mit einem vorderen Endstück und einem dem vorderen Endstück vorgelagerten Auskopplungselement, **dadurch gekennzeichnet, dass** das vordere Endstück (3) zur Erzeugung einer variablen Lichtverteilung in horizontaler Richtung (8) relativ gegenüber dem Auskopplungselement in einer Verstellebene mindestens um einen horizontalen Verstellweg dynamisch verstellt wird.

9. Verfahren nach Anspruch 8, **dadurch gekennzeichnet, dass** das vordere Endstück (3) in horizontaler Richtung (8) variabel in Abhängigkeit von der Fahrtrichtung des Kraftfahrzeuges zur Erzeugung eines Kurvenlichtes verstellt wird.

10. Verfahren nach Anspruch 8 oder 9, **dadurch gekennzeichnet, dass** das vordere Endstück (3) relativ gegenüber dem Auskoppelungselement in der Verstellebene um einen vertikalen Verstellweg zur Erzeugung einer dynamischen Leuchtweitenregulierung verstellt wird.

11. Verfahren nach einem der Ansprüche 8 oder 10, **dadurch gekennzeichnet, dass** zur Variation der Hell-Dunkel-Grenze das vordere Endstück (3, 3') um seine Längsachse (29, 29') gedreht wird.
